# EUROPÄISCHE PATENTSCHRIFT

(11) **EP 0 507 992 B1**
(45) Veröffentlichungstag und Bekanntmachung des Hinweises auf die Patenterteilung: **14.09.1994**
(21) Anmeldenummer: 91120727.2
(22) Anmeldetag: 03.12.1991
(51) Int. Cl.: B01D 19/00

(54) **Luftabscheider in einer Milchmessanlage**
Air separator in a milk measuring installation
Séparateur d'air dans une installation de mesure de lait

(30) Priorität: 08.04.1991 DE 4111280
(43) Veröffentlichungstag der Anmeldung: 14.10.1992
(73) Patentinhaber: JANSKY GMBH, D-48282 Emsdetten (DE)
(72) Erfinder: Jansky, Manfred, Dipl.-Ing., W-4407 Emsdetten (DE)
(74) Vertreter: Cohausz & Florack Patentanwälte

(56) Entgegenhaltungen:
- DE-A- 2 437 306
- DE-B- 1 128 216
- DE-C- 3 505 466
- GB-A- 918 105
- US-A- 3 771 290

## Beschreibung

Die Erfindung bezieht sich auf einen Luftabscheider in einer Milchmeßanlage in Form eines Behälters mit einem im Bereich seines Bodens angeordneten Auslauf und einem in seinem oberen Bereich insbesondere tangential einmündenden Einlaufstutzen. Ein solcher Luftabscheider ist z.B. aus DE-B-1128216 bekannt.

Mit einem solchen Luftabscheider in einer Milchmeßanlage sind beispielsweise Milchsammelwagen ausgerüstet, die bei verschiedenen Lieferanten anfahren und Milch annehmen. Bei dieser Annahme wird die Milch aus bereitgestellten Behältern abgesaugt und über den Luftabscheider in einen Tank auf dem Sammelwagen gefördert. Bei einer solchen Annahme wird zwangsläufig auch Luft angesaugt, die dazu führt, daß die Milch Luftblasen enthält. Damit aus Gründen einer fehlerfreien volumetrischen Messung der Anteil an Luftblasen in der Milch nicht zu groß wird, sind am Luftabscheider verschiedene Maßnahmen getroffen worden. So hat man zwei gegensinnig tangential in den Luftabscheider einmündende Einlaufstutzen vorgesehen. Doch auch in diesem Fall lassen sich Turbulenzen mit entsprechender Schaumbildung nicht vermeiden. Darüber hinaus hat man durch entsprechende Querschnittsdimensionierung dafür gesorgt, daß die Sinkgeschwindigkeit der Milch im Luftabscheider kleiner als die Aufsteiggeschwindigkeit der Luftblasen ist (DE-A-2437306). Mit zunehmender Durchflußleistung reichen diese Maßnahmen aber nicht aus, um den steigenden Forderungen nach einer exakten volumetrischen Messung der Milch zu entsprechen.

Aufgabe der Erfindung ist es, die Leistung des Luftabscheiders zu verbessern.

Diese Aufgabe wird bei einem Luftabscheider der eingangs genannten Art dadurch gelöst, daß dem Einlaufstutzen ein Trichter vorgeordnet ist, der sich zum Einlaufstutzen hin bis auf dessen Querschnitt erweitert, und daß im Einlaufstutzen unmittelbar hinter dem Trichter ein den gesamten Querschnitt des Einlaufstutzens einnehmender und die Milch über den gesamten Querschnitt des Einlaufstutzens verteilender Staukörper sitzt. Vorzugsweise ist der Staukörper als Stopfen mit einer Vielzahl von parallelen Kanälen ausgebildet.

Bei dem erfindungsgemäßen Luftabscheider wird die Strömungsgeschwindigkeit der in den Luftabscheider einströmenden Milch unmittelbar vor dem Eintritt in den Luftabscheider herabgesetzt. Dabei sorgt der Staukörper dafür, daß sich der Trichter über seinen gesamten Querschnitt füllt. Darüber hinaus wird durch den Staukörper erreicht, daß die ihn verlassende Milch über den gesamten Stutzenquerschnitt verteilt ist. Diese Verteilung erfolgt vorzugsweise über die parallelen Kanäle. Eine andere Verteilung beispielsweise über Siebe ist aber ebenfalls möglich. Durch die Reduzierung der Strömungsgeschwindigkeit und die parallelen Kanäle gelangt die Milch in laminarer Strömung in den Behälter. Zu den sonst wegen der hohen Strömungsgeschwindigkeiten auftretenden Turbulenzen, die Lufteinschlüsse bewirken, kann es somit nicht kommen. Im Ergebnis wird mit dem erfindungsgemäßen Luftabscheider erreicht, daß die Milchmeßanlage mit höherer Durchsatzleistung betrieben werden kann ohne daß bei dieser höheren Leistung die Milch einen höheren Anteil an den Lufteinschlüssen als in herkömmlichen Anlagen hat, oder daß bei gleicher Durchsatzleistung einen geringeren Anteil an Lufteinschlüssen hat.

Im folgenden wird die Erfindung anhand einer ein Ausführungsbeispiel darstellenden Zeichnung näher erläutert. Im einzelnen zeigen:

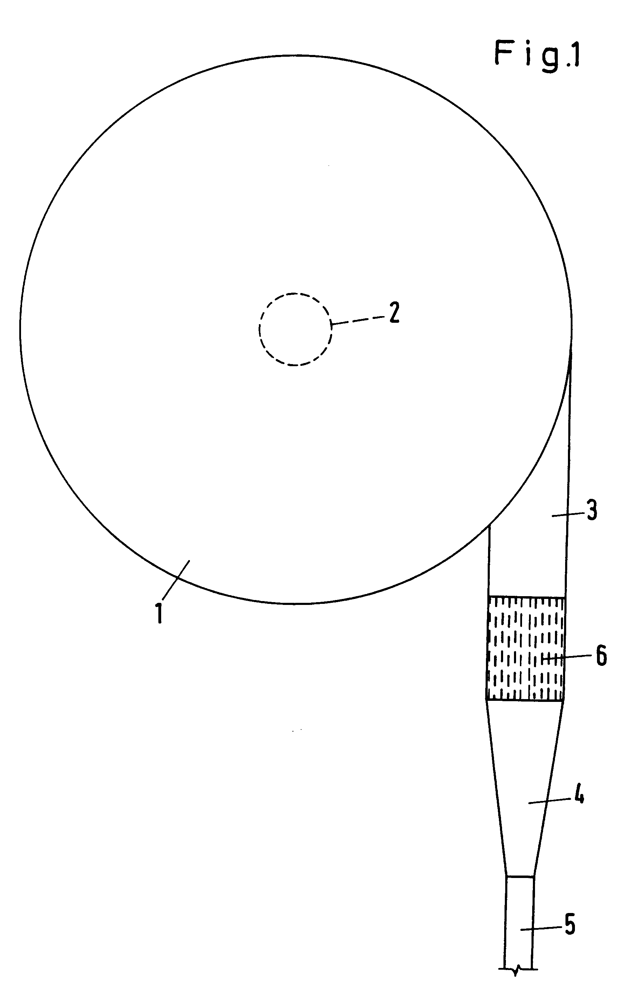

- Figur 1: einen Luftabscheider in schematischer Darstellung in Aufsicht,
- Figur 2: einen Staukörper in Vorderansicht **und**
- Figur 3: den Staukörper gemäß Figur 1 im Axialschnitt.

Der Luftabscheider 1 ist als ein geschlossener, zylindrischer Behälter 1 mit einem in seinem Boden angeordneten Auslauf 2 und einem tangential in den Behälter 1 einmündenden Einlaufstutzen 3 ausgebildet. Nicht dargestellt, aber allgemein bekannt ist, daß ein solcher Luftabscheider etwa auf halber Höhe mit einem ringförmigen Verdrängungskörper ausgerüstet sein kann, der mit der Wand des Behälters 1 einen Ringspalt für den Durchtritt der Milch und mittig eine Öffnung für einen Schwimmer aufweist, über den in Abhängigkeit von dem Füllstand im Behälter ein im Auslauf 2 angeordnetes Ventil der Milchmeßanlage gesteuert wird.

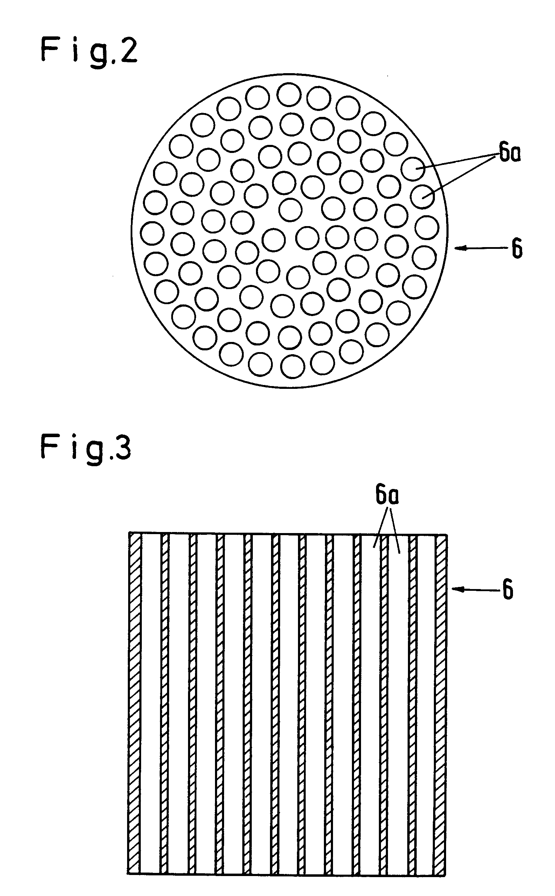

Dem Einlaufstutzen 3 ist ein sich zum Einlaufstutzen 3 hin im Querschnitt erweiternder Trichter 4 vorgeordnet, der mit seinem im Querschnitt kleinen Eingang mit einem Schlauch oder einer Leitung verbunden ist, über die die angenommene Milch gefördert wird. Unmittelbar hinter dem Trichter 4 sitzt im Einlaufstutzen 3 ein Staukörper 6, der den gesamten Querschnitt des Einlaufstutzens 3 einnimmt. Wie Figur 2 und 3 zeigen, ist dieser Staukörper 6 als Stopfen mit einer Vielzahl von axialen, parallelen Kanälen 6a ausgebildet.

Der Trichter 4 bewirkt im Zusammenspiel mit dem Staukörper 6, daß die über die Leitung 5 geförderte Milch sich aufgrund der Stauung über den gesamten Querschnitt des Trichters 4 verteilt, so daß deren Strömungsgeschwindigkeit in Richtung des Behälters 1 entsprechend der Querschnittserweiterung ständig vermindert wird. Die axialen, parallelen Kanäle 6a bewirken, daß sich am Ausgang des Staukörpers 6 eine laminare, über den gesamten Querschnitt des Einlaufstutzen 5 verteilte Strömung einstellt. Aufgrund dieser laminaren Strömung verminderter Geschwindigkeit kommt es beim Einströmen der Milch in den Behälter 1 nicht zu Strömungsturbulenzen, die einen weiteren Lufteinschluß zur Folge haben. Im Ergebnis wird durch Trichter 4 und Staukörper 6 erreicht, daß die von Lufteinschlüssen zu befreiende Milch im Behälter 1 einen geringeren Anteil an Lufteinschlüssen hat im Vergleich zu Milch, die mit einem Luftabscheider ohne Trichter 4 und Staukörper 6 in den Behälter 1 gelangt.

## Patentansprüche

1. Luftabscheider in einer Milchmeßanlage in Form eines Behälters (1) mit einem im Bereich seines Bodens angeordneten Auslauf (2) und einem in seinem oberen Bereich insbesondere tangential einmündenden Einlaufstutzen (3), **dadurch gekennzeichnet,** daß dem Einlaufstutzen (3) ein Trichter (4) vorgeordnet ist, der sich zum Einlaufstutzen (3) hin bis auf dessen Querschnitt erweitert, und daß im Einlaufstutzen (3) unmittelbar hinter dem Trichter (4) ein den gesamten Querschnitt des Einlaufstutzens einnehmender und die Milch über den gesamten Querschnitt des Einlaufstutzens verteilender Staukörper sitzt.

2. Luftabscheider nach Anspruch 1, **dadurch gekennzeichnet,** daß der Staukörper (6) als Stopfen mit einer Vielzahl von parallelen Kanälen (6a) ausgebildet ist.

## Claims

1. An air separator in a lactometer apparatus in the form of a tank (1) having an outlet (2) disposed in the zone of its base and an inlet spigot (3) discharging more particularly tangentially into its upper zone, characterized in that the inlet spigot (3) is preceded by a funnel (4) which widens in the direction of the inlet spigot (3) until it reaches the spigot cross-section, and a damming member which occupies the whole cross-section of the inlet spigot (3) and distributes the milk over the whole cross-section of the inlet spigot is disposed therein immediately downstream of the funnel (4).

2. An air separator according to claim 1, characterized in that the damming member (6) takes the form of a plug formed with a plurality of parallel channels (6a).

## Revendications

1. Séparateur d'air dans une installation pèse-lait, comprenant un récipient (1) pourvu dans la zone de son fond d'une sortie (2) et dans sa partie supérieure d'une tubulure d'entrée (3) débouchant de manière notamment tangentielle, caractérisé en ce qu'un entonnoir (4) est monté sur la tubulure d'entrée (3), et cet entonnoir s'élargit vers la tubulure d'entrée jusqu'à la section transversale de cette dernière, et en ce qu'immédiatement derrière l'entonnoir (4) un corps de retenue (6) est disposé dans la tubulure d'entrée (3), ce corps de retenue occupant toute la section de ladite tubulure d'entrée et répartissant le lait sur la totalité de la section de la tubulure d'entrée.

2. Séparateur d'air selon la revendication 1, caractérisé en ce que le corps de retenue (6) est conformé en tampon et comporte une multiplicité de canaux parallèles (6a).
